# EUROPEAN PATENT SPECIFICATION

(11) **EP 1 389 412 B1**
(45) Date of publication and mention of the grant of the patent: **26.03.2008**
(21) Application number: 03102480.5
(22) Date of filing: 08.08.2003
(51) Int. Cl.: A01B 59/00

(54) **Coupling hook particularly for the lower arms of a three-point linkage of a tractor**
Kupplungshaken insbesondere für die Dreipunktkraftheberunterlenker eines Traktors
Crochet d'attelage particulièrement pour les bras inférieurs d'un attelage trois points d'un tracteur

(30) Priority: 15.08.2002 FI 20020339
(43) Date of publication of application: 18.02.2004
(73) Proprietor: Viikki, Paavo, 41370 Kuusa (FI)
(72) Inventor: Viikki, Paavo, 41370 Kuusa (FI)
(74) Representative: Helke, Kimmo Kalervo

(56) References cited:
- EP-A- 0 937 592
- EP-A- 1 145 613
- WO-A-00/10376
- DE-A- 2 617 021
- US-A- 4 279 431

## Description

The present invention relates to a coupling hook particularly for the lower arms of a three-point linkage of a tractor, which is of the type referred to in the preamble to Claim 1. Such a hook is known from international patent publication WO 00/10376.

A quick-release coupling for a three-point linkage for a tractor has been developed for a long time. Generally, the quick-release coupling employs coupler balls fitted to the device being coupled, to which the tractor's upper and lower arms are connected. There are special coupling hooks for this quick-release coupling, at the ends of the upper and lower arms.

The location of the operating lever of the coupling hook of publication DE 2617021 is quite typical. The operating lever is set to move in an opening above the body and it extends visibly above the body, where it can be easily grasped.

In practice, the fact that the operating lever protrudes above the body leads to a considerable risk of damage, if a trailer, which is coupled by its towbar to the tractor's hook, is sometimes used. If the lower arms are not detached from the tractor, the hook's protruding operating lever may be damaged. In fact, such accidents often take place, if the towbar turns at an angle above the hook while the tractor is turning close to the towbar, when the trailer is being coupled or uncoupled. The hook according to the DE publication will be entirely torn off. Even the construction according to the WO publication will not always be safe from damage. On the other hand, it is not wished to detach the hooks, as they are used alternately to a trailer.

The present invention is intended to create an improved hook construction, by means of which damage to the hook and especially to its operating lever will be avoided if it strikes the towbar of a trailer. The characteristic features of the hook according to the invention are stated in the accompanying Claim 1. According to one preferred embodiment, there is a hole in the operating lever for a finger grip and this hole conforms to the lower part of the recess, when the operating lever is in the lower position. Other benefits and embodiments of the invention are described later. The invention is suitable for use in connection with coupling hooks with different types of mechanism.

In the following, the invention is described with the aid of the accompanying example, which is shown in the accompanying drawings.
- Figure 1: shows the coupling hook according to the invention seen from the opposite side to the housing, without the coupler ball,
- Figure 2: shows the coupling hook of Figure 1, seen from the side of the housing and with the coupler ball locked into the coupling jaw,
- Figure 3: shows the coupling hook of Figure 1 with the housing cover removed and with the catch in the locking position,
- Figure 4: shows a corresponding assembly to that of Figure 3, with the operating lever locked in the open position,
- Figure 5: shows the housing of the coupling hook, without the moving parts.

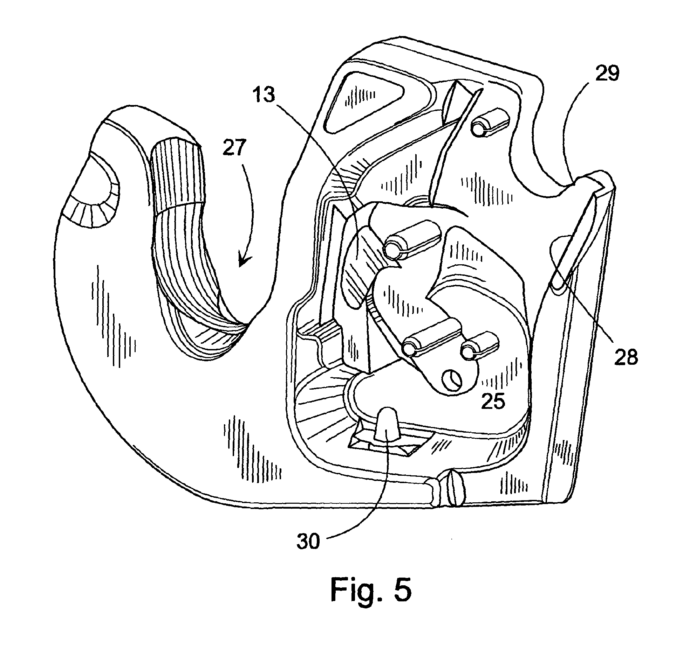

In the example, a construction largely according to Figures 5 and 6 of the aforesaid WO publication is used, though the invention is also suitable for use in connection with other catch mechanisms.

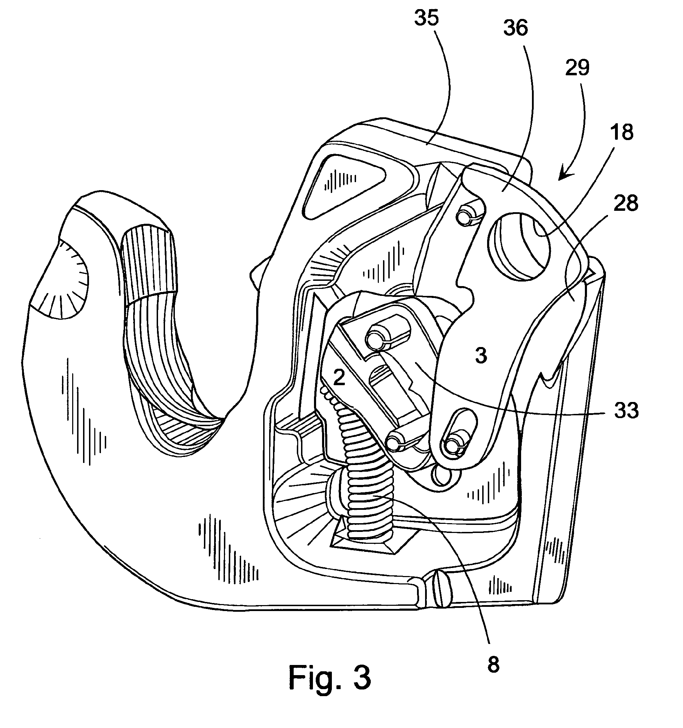

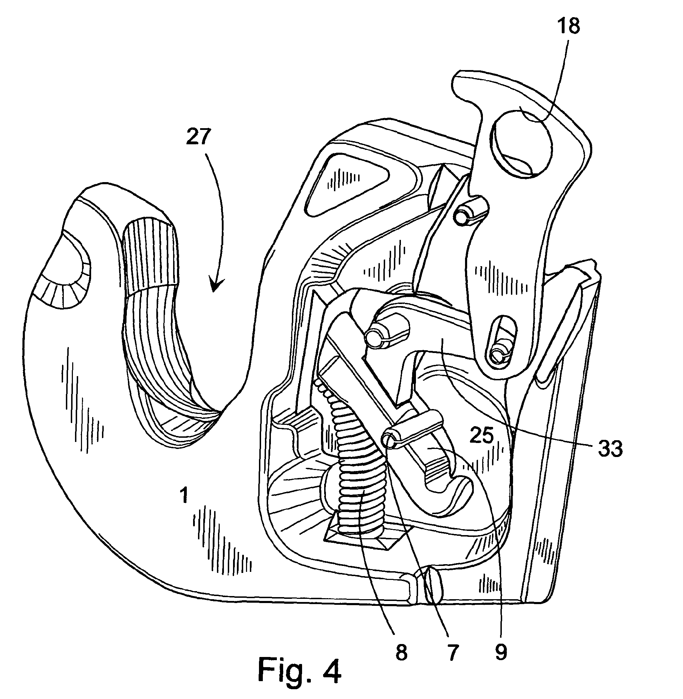

In Figures 3 and 4, the coupling hook according to the invention is shown without the cover 34, which in the finished product is welded onto the forged component and forms part of the body. The coupling hook is welded conventionally to an arm component (not shown).

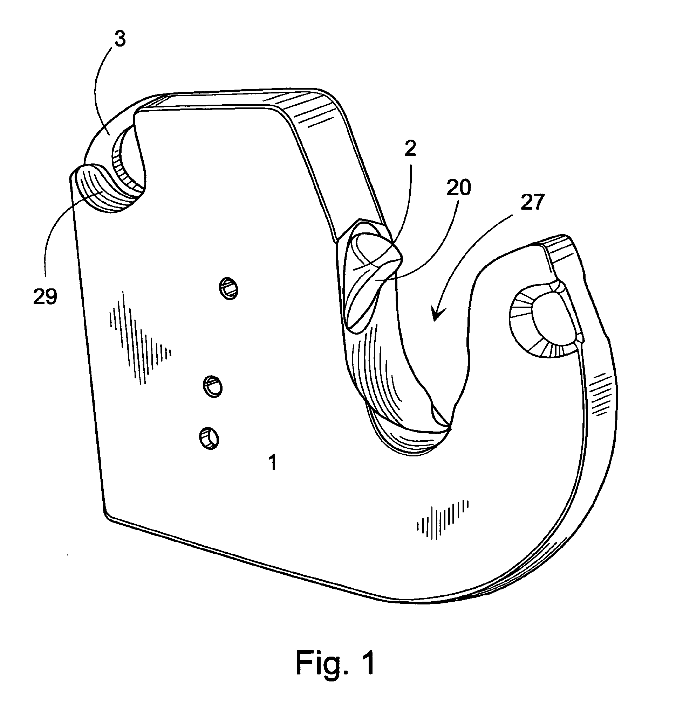

With reference to Figures 1, 2, and 3, the coupling hook includes a body 1, in which there is a coupling jaw 27 and a housing 25. The coupling jaw 27 is conventional and is arranged particularly to receive a coupler ball 11. The coupler ball placed in the coupling jaw 27 is locked with a catch 2, the front of which has a spherically shaped under surface, Figure 1.

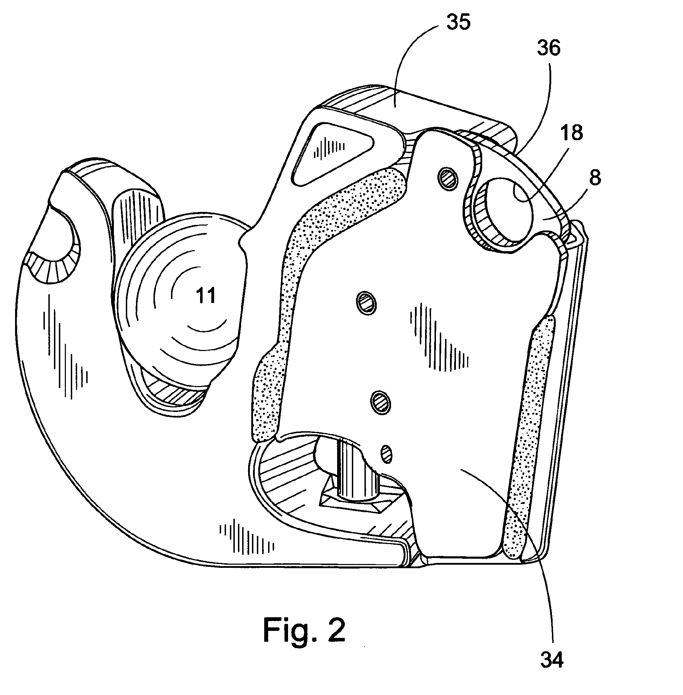

The most essential feature in terms of the present invention relates to the operating lever 3 and the recess 29 reserved for this in the body. As Figures 1 and 2 clearly show, in the lower position the operating lever 3 is well protected. A trailer towbar that sweeps over the top of the hook can no longer damage the operating lever. In this case, the upper surface 36 of the operating lever conforms to the outline of the body, but it can also remain lower. The body of the hook will, on the other hand, withstand even violent collisions. The recess 29 of the body 1 provides finger access to the hole 18 in the operating lever 3, which provides a grip for raising the operating lever. The recess is preferably wide enough to allow the operating lever to be handled even with gloved hands.

The depth of the recess 29 is 60 - 140 %, preferably 80 - 120 % of its width (in the longitudinal direction of the hook), however, at least 2,5 cm. The recess preferably extends through the hook.

In the coupling hook's body, which is made as a forged piece, there is a housing 25, in which there are only a few machined surfaces and into which the operating mechanism of the catch 2 is fitted. The catch 2 is supported by a round hole 13 in the body (Figure 5). As the forged body component has material on both sides of the catch, its construction is particularly sturdy. There is a machined drill hole in the forged component for the catch. The cross-section of the catch itself is slightly oval, allowing it to turn slightly at the start of the opening movement (in this mechanism). Such a construction is also preferable in hooks equipped with other kinds of mechanism.

The catch 2 has a slot 9, with a pin 7 in the body 1 to fit this and arranged to limit the linear movement of the catch 2 (mechanism according to the WO publication). Besides guiding the catch 2, the pin 7 limits the linear movement of the catch 2 to its operational area, preventing the catch's 2 operating mechanism from being loaded unnecessarily. A spring 8 is fitted into a drill hole formed in the lower end of the catch 2 and continuously presses the catch 2 into the locking position. The other end of the spring 8 fits onto a pin 30 set in the bottom of the housing 25 (Figure 5).

## Claims

1. A coupling hook particularly for the lower arms of a three-point linkage of a tractor, which is intended to attach an implement to the tractor by means of a coupler ball (11) or similar, which coupling hook includes a body (1), in which there is a housing (25) with a catch mechanism therein; a catch operated by the catch mechanism and an operating lever (3) of the catch mechanism, fitted to the catch (2), for moving the catch (2) particularly from the retaining position to the open position (2), which operating lever is set to move in an opening (28) above the housing (25), and a recess (29) is formed in the body (1) at the opening (28) of the operating lever (3), whereby in the lower position the upper surface (36) of the operating lever (3) is arranged to conform to the upper part of the body (1) or lie beneath it for receiving a collision with the body (1) of the hook, caused by the sweeping movement of a trailer towbar and directed towards the coupling hook, **characterized in that** the depth of the recess is 60 - 140 %, preferably 80 - 120 %, of the width of the recess (29), being, however, at least 2,5 cm.

2. A coupling hook according to Claim 1, **characterized in that** the operating lever (3) includes a hole (18) for a finger grip.

3. A coupling hook according to Claim 2, **characterized in that** the hole (18) conforms to the lower part of the recess (29).

4. A coupling hook according to any of Claims 1 - 3, **characterized in that** the body (1) is formed of a forged component and of a cover plate (34) welded on top of the housing, in both of which the aforesaid recess (29) is formed.

## Patentansprüche

1. Speziell für den Unterlenker der Dreipunktaufhängung eines Traktors bestimmter Fanghaken, der zum Ankuppeln eines Geräts an den Traktor über eine Fangkugel (11) oder dergleichen dient, und der einen Hakenkörper (1) umfasst, der ein Gehäuse (25) mit einem Sperrmechanismus, einen durch den Sperrmechanismus zu betätigenden Riegel und einen an dem Riegel (2) angeordneten Betätigungshebel (3) für den Sperrmechanismus zum Bewegen des Riegels (2) besonders aus seiner Sperrstellung in Entriegelungsstellung hat, wobei der Betätigungshebel sich in einer am Gehäuse (25) oben angebrachten Öffnung (28) bewegt, und bei der für den Betätigungshebel (3) vorhandenen Öffnung (28) am Hakenkörper (1) eine Vertiefung (29) ausgebildet ist, wobei in Tiefstellung des Betätigungshebels (3) dessen obere Fläche (36) bündig mit der Oberfläche des oberen Teils des Hakenkörpers (1) oder unterhalb dieser Oberfläche verläuft, sodass Kollisionen infolge der zum Fanghaken hin gerichteten Streifbewegung der Anhängerzugstange vom Körper (1) des Fanghakens aufgefangen werden, **dadurch gekennzeichnet, dass** die Tiefe der Vertiefung (29) 60 - 140 %, am bevorzugtesten 80 - 120 % ihrer Breite, wenigstens jedoch 2,5 cm beträgt.

2. Fanghaken nach Anspruch 1, **dadurch gekennzeichnet, dass** der Betätigungshebel (3) ein Loch (18) für Fingereingriff hat.

3. Fanghaken nach Anspruch 2, **dadurch gekennzeichnet, dass** das Loch (18) bündig ist mit dem unteren Teil der Vertiefung (29).

4. Fanghaken nach irgendeinem der Ansprüche 1 bis 3, **dadurch gekennzeichnet, dass** der Hakenkörper (1) aus einem Schmiedeteil und einer auf das Gehäuse aufgeschweißten Deckelplatte (34) besteht, welche beide mit der besagten Vertiefung (29) versehen sind.

## Revendications

1. Crochet d'accouplement en particulier pour les bras inférieurs d'un attelage à trois points d'un tracteur, qui est prévu pour attacher un dispositif au tracteur au moyen d'une bille de couplage (11) ou d'un organe similaire, lequel crochet d'accouplement comprend un corps (1), dans lequel se trouve un logement (25) muni d'un mécanisme de crochet ; un crochet fonctionnant avec le mécanisme de crochet ; et un levier de manoeuvre (3) du mécanisme de crochet, adapté au crochet (2), en particulier pour déplacer le crochet (2) de la position de retenue à la position d'ouverture, lequel levier de manoeuvre est disposé pour se déplacer dans l'ouverture supérieure (28) du logement (25), et la cavité (29) est formée dans le corps (1) au niveau de l'ouverture (28) du levier de manoeuvre (3), par quoi la surface supérieure (36) du levier de manoeuvre (3) est, dans sa partie inférieure, prévue pour épouser la partie supérieure du corps ou en dessous de celle-ci pour recevoir un choc sur le corps du crochet (1), choc causé par un mouvement de balayage d'une barre de remorquage en direction du crochet d'attelage, **caractérisé en ce que** la profondeur de la cavité (29) équivaut à 60 - 140 %, selon un mode de réalisation avantageux de l'invention à 80 - 120 % de la largeur de celle-ci, au minimum toutefois à 2,5 centimètres.

2. Crochet d'accouplement selon la revendication 1, **caractérisé en ce que** le levier de manoeuvre (3) comporte un trou (18) fournissant une prise pour le doigt.

3. Crochet d'accouplement selon la revendication 2, **caractérisé en ce que** le trou (18) épouse la partie inférieure de la cavité (29).

4. Crochet d'accouplement selon l'une quelconque des revendications 1 à 3, **caractérisé en ce que** le corps (1) est constitué d'un élément forgé et d'un couvercle (34) soudé sur le logement, la cavité susmentionnée (29) étant formée dans tous les deux.
